# EUROPÄISCHE PATENTSCHRIFT

(11) **EP 3 570 017 B1**
(45) Veröffentlichungstag und Bekanntmachung des Hinweises auf die Patenterteilung: **21.12.2022**
(21) Anmeldenummer: 19174595.9
(22) Anmeldetag: 15.05.2019
(51) Int. Cl.: G01N 25/10, B01D 3/00

(54) **VORBEREITUNG EINER DESTILLATIONSMESSUNG**
PREPARATION OF DISTILLATION MEASUREMENT
PRÉPARATION D'UNE MESURE DE DISTILLATION

(30) Priorität: 16.05.2018 DE 102018111816
(43) Veröffentlichungstag der Anmeldung: 20.11.2019
(73) Patentinhaber: Anton Paar ProveTec GmbH, 15827 Blankenfelde-Mahlow (DE)
(72) Erfinder: Zimmermann, Frank, 15566 Schöneiche (DE); Kindt, Carsten, 12247 Berlin (DE); Pergande, Daniel, 14513 Teltow (DE)
(74) Vertreter: Dilg, Haeusler, Schindelmann Patentanwaltsgesellschaft mbH

(56) Entgegenhaltungen:
- EP-A1- 1 967 269
- EP-B1- 1 967 269
- AT-B- 412 025
- DE-A1- 2 419 156
- US-A1- 2017 212 139
- US-B2- 8 367 022

## Beschreibung

Die vorliegende Erfindung betrifft eine Vorrichtung zur Vorbereitung einer Destillationsmessung einer Flüssigkeit, und ein Verfahren zur Vorbereitung einer Destillationsmessung einer Flüssigkeit.

### Hintergrund

Gemäß Normen der standardisierten Tests zum Analysieren von Verdampfungseigenschaften der Flüssigkeiten ist vorgeschrieben, dass je nach Kolbengröße und je nach zu untersuchender Flüssigkeitsprobe eine von vier unterschiedlichen Lochplatten oder Isolierplatten ausgewählt werden muss, welche auf die Heizvorrichtung platziert werden müssen, um den Kolben mit der zu untersuchenden Probe gemäß standardisierten Bedingungen heizen zu können. Die Lochplatten bzw. Isolierplatten unterscheiden sich unter anderem im Durchmesser des Loches im Zentrum der Platte, auf dessen Rand während der standardisierten Messung bzw. während des standardisierten Tests der Rundkolben aufsitzt. Dabei sitzt die Lochplatte auf der Heizvorrichtung auf, welche von unten an den Kolben herangeführt wird, bis die Lochplatte den Kolben von der Unterseite her dicht abschließt.

EP 1 967 269 B1 offenbart eine automatische Positioniervorrichtung mit einer Heizkammer gegenüber einem Destillierkolben, welche einen ortsfesten Ständer, eine Heizkammer mit einem Heizelement, einen Satz von Destillierkolben mit Stopfen und darin eingebauten Thermometern, einen Satz von Isolierplatten und Mittel zur Steuerung der Heizung aufweist. Ein Schlitten ist über eine Feder mit konstanter Kraft mit der Heizkammer verbunden, um die Heizkammer zwischen einer Ruheposition und einer Arbeitsposition zu bewegen. Dazu sind manuelle Betätigungsmittel zur Bewegung des Schlittens und Verriegelungsmittel zur Fixierung der Arbeitsposition vorgesehen.

EP 1 967 848 B1 offenbart eine Dekodierungsvorrichtung von Isolierplatten für ein standardisiertes Destilliergerät, wobei in eine Isolierplatte Dekodierlöcher eingebracht sind und auf einer Oberfläche des Dekoders basierend auf einem Modell verteilt sind, welches spezifisch für die Oberfläche ist. Ein Satz von Sensoren ist den entsprechenden Dekodierlöchern zugeordnet und die Sensoren senden Detektionssignale aus, welche die Isolierplatten repräsentieren, um zu verifizieren, ob eine Isolierplatte, welche einem vorbestimmten Teststandard entspricht, zwischen einem Heizelement und einem Destillationskolben zwischengelegt ist.

Herkömmlicherweise wird die Lochplatte vor Beginn der Durchführung eines standardisierten Tests von einem Anwender ausgewählt. Dabei kann ein Fehler unterlaufen, indem der Anwender eine falsche Lochplatte auswählt und auf die Heizvorrichtung aufsetzt. Bei Verwendung einer falschen Lochplatte kann der Test nicht fehlerfrei durchgeführt werden, insbesondere nicht standardgerecht bzw. normgerecht durchgeführt werden. Der Test muss dann abgebrochen werden, die korrekte Lochplatte muss ausgewählt und auf die Heizvorrichtung aufgesetzt werden und der Test muss wiederum gestartet werden. Damit steigen Zeitaufwand und Kosten.

Es ist somit eine Aufgabe der vorliegenden Erfindung eine Vorrichtung und ein entsprechendes Verfahren zur Vorbereitung einer Destillationsmessung einer Flüssigkeit bereitzustellen, womit ein standardisierter Test zur Bestimmung von Verdampfungseigenschaften der Flüssigkeit schneller und zuverlässiger durchgeführt werden kann. Insbesondere ist es eine Aufgabe der Erfindung, derartige Vorrichtungen und Verfahren bereitzustellen, wobei Bedienfehler vermieden werden und ferner eine Lochplatte exakt und fehlerfrei am Kolben positioniert werden kann. Insbesondere ist es eine Aufgabe der vorliegenden Erfindung, eine Beschädigung des Gaskolbens durch eine zu hohe Krafteinwirkung von unten zu verhindern, welche über die Lochplatte vermittelt wird.

### Zusammenfassung der Erfindung

Gemäß der vorliegenden Erfindung ist eine Vorrichtung zur Vorbereitung einer Destillationsmessung einer Flüssigkeit gemäß Anspruch 1 bereitgestellt. Die Vorrichtung weist auf:
reine Lochplatte; einen Behälter mit einer Öffnung; eine Heizung, auf die die Lochplatte aufsetzbar ist und die zum Heizen des die Flüssigkeit enthaltenen, auf die Lochplatte aufgesetzten Behälters zum Durchführen eines standardisierten Tests zur Bestimmung von Verdampfungseigenschaften der Flüssigkeit ausgebildet ist; ein, insbesondere elektrisches, Verfahrsystem, das ausgebildet ist, die Heizung (z.B. vertikal nach oben) zu verfahren und ein weiteres Verfahren des Heizsystems zu unterbrechen, falls eine Andruckkraft der auf die Heizung aufgesetzten Lochplatte gegen den Behälter einen Schwellenwert erreicht.

Die vorliegende Erfindung liegt im Gebiet der Automatischen (oder Atmosphärischen) Destilliereinheiten (ADU), mit denen gemäß verschiedenen Normen (z.B. ASTM D86) das Siedeverhalten von Flüssigkeiten, insbesondere von Erdölprodukten oder Lösemitteln, bestimmt werden kann. Dabei wird ein genormtes Probengefäß, der sogenannte Kolben, von unten beheizt und das dabei entstehende Destillat wird über einen Verflüssiger bzw. Kondensator in ein Auffanggefäß abgeführt. Das Destillationsverhalten der Flüssigkeit wird u.a. mittels einer Temperaturmessung charakterisiert.

Die Destillationsmessung kann einen standardisierten Test gemäß einer Norm, z.B. ASTM-Norm oder ISO-Norm umfassen.

Gemäß genau vorgeschriebenen Richtlinien in dem anwendbaren Standardtest wird gemäß Ausführungsformen der Erfindung ein vorgegebenes Volumen einer Probe in den Probenbehälter (z.B. Kolben) gefüllt und der Probenbehälter mit der Vorrichtung zum Verschließen verschlossen. Die Probe wird dann unter definierten Bedingungen geheizt, so dass Teile der Probe verdampfen. Der Dampf wird in einer Kondensatorlinie gekühlt und das Kondensat wird in einem Zylinder gesammelt. Während der Durchführung des Tests werden mittels des Temperaturmesssystems die Temperatur des Dampfes und die Zeit aufgezeichnet. Als Ergebnisse eines standardisierten Automatischen Destillations-Tests können z.B. die folgenden Parameter erhalten werden:
- Anfänglicher Siedepunkt, d.h. die Temperatur, bei der der erste Tropfen eines Destillats in den Aufnahmezylinder fällt
- Endsiedepunkt, d.h. die maximale Temperatur während der Destillation
- Das gesamte in dem Empfangszylinder aufgefangene Volumen des Destillats
- Der in dem Destillationsbehälter verbleibende Rest der Probe
- Trockenpunkt, d.h. die Temperatur, bei der der letzte Tropfen des Destillats von dem Boden des Behälters verdampft
- Destillationskurve.

Die Destillationskurve kann erhalten werden, indem die Temperatur gegen das relative Rückgewinnungsvolumen im Aufnahmezylinder aufgetragen wird. Aus der Destillationskurve kann z.B. der Siedebereich der Probe als die Differenz zwischen der maximalen Temperatur und der minimalen Temperatur abgeleitet werden.

Insbesondere sind Ausführungsformen der vorliegenden Erfindung geeignet für ein Durchführen von Standardtests für die Destillation von Petroleumprodukten, wie etwa ASTM D86 (Gruppen 0 bis 4), ISO3405, IP123, BS2000-123, jeweils in der am Anmeldetag gültigen Version.

Ausführungsformen der vorliegenden Erfindung sind ferner geeignet, Standardtests für die Destillation von Lösungsmitteln durchzuführen, etwa ASTM D1078, IP 95, BS2000-195, ASTM D850. Als Ergebnisse der Durchführung der Tests kann eine jeweilige Destillationskurve der untersuchten Probe, sowie z.B. der Trocknungspunkt erhalten werden. Die oben genannten Tests sind zumindest zu den jeweiligen am Anmeldetag gültigen Versionen der Standardtests durchführbar.

Ausführungsformen der vorliegenden Erfindung können z.B. eine standardisierte Untersuchung einer Probe mit einem Siedebereich zwischen z.B. 20°C und 400°C unterstützen. Insbesondere können die Standards ASTM D86, ASTM D850, ASTM D1078 unterstützt werden, sowie ISO 3405, IP 123, IP 195, alle jeweils in der am Anmeldetag gültigen Version. Die Spezifikationen für diese Standardtests können bei ASTM (z.B. www.ASTM.org) erhalten werden. Gemäß Ausführungsformen der vorliegenden Erfindung kann ein Dampftemperaturbereich von 0°C bis 450°C, ein Kondensatortemperaturbereich von 0°C bis 80°C und ein Kammertemperaturbereich von 0° bis 50° unterstützt werden. Ferner kann ein atmosphärischer Drucksensor in Ausführungsformen umfasst sein, welcher ermöglicht, die Ergebnisse automatisch auf einen Standarddruck korrigieren zu können.

Insbesondere sind Ausführungsformen der vorliegenden Erfindung zur Charakterisierung von Erdölprodukten ausgelegt, insbesondere verschieden von Entsalzungsanlagen für Meerwasser, Anlagen zur Trinkwasseraufbereitung, Reinigungsanlagen für Abwasser, chemischen Anlagen für die Behandlung von Kohlenwasserstoffen, Rotationsverdampfern, Destillationsanlagen für die Verarbeitung von biologischen Stoffen. Insbesondere stellen Ausführungsformen der vorliegenden Erfindung ein standardisiertes Destillationsgerät, insbesondere ein automatisches Destillationsgerät unter atmosphärischem Druck für flüssige Proben bereit, insbesondere für Proben von Mineralölprodukten, wobei die Messung von Destillationsparametern gemäß einem vordefinierten Teststandard durchgeführt wird, welcher von einer Mehrzahl von möglichen Standards ausgewählt ist, von denen oben einige Beispiele gegeben wurden.

In einer alternativen Ausführungsform kann ein standardisiertes Destillationsgerät zur Messung von Destillationsparametern unter reduziertem Druck oder unter Vakuum zur Verfügung gestellt sein.

Die Lochplatte kann aus isolierendem Material gefertigt sein und ein zentrales Loch bzw. eine zentrale Aussparung aufweisen, welche kreisförmig ist. Der Durchmesser der kreisförmigen Aussparung in der Lochplatte kann kleiner sein als der Durchmesser eines Behälters, insbesondere eines Rundkolbens. Die Lochplatte kann mit der Heizung reversibel verbindbar sein, etwa durch ein oder mehrere Klemmen, einen Schraubmechanismus, Magnetelemente oder ähnliches. Der Behälter, insbesondere Glasrundkolben, kann insbesondere, nach Aufsetzen der Lochplatte auf die Heizung, so auf die Lochplatte aufgesetzt werden, dass der Rand der kreisförmigen Aussparung eine äußere Oberfläche, insbesondere einen Streifen einer Kugeloberfläche kontaktiert, um zu erreichen, dass ein vorbestimmter Teil des Rundkolbens, welcher sich unterhalb der Ebene der Lochplatte befindet, in einer vorbestimmten Position relativ zu Heizelementen der Heizung befindet. Somit kann eine Beheizung der innerhalb des Behälters befindlichen Flüssigkeit gemäß einer oder mehreren definierten Normen bzw. Standards erreicht werden. Die Heizung kann elektrische Heizelemente umfassen.

Bei der Flüssigkeit kann es sich insbesondere um ein Mineralölprodukt oder eine Mischung von Mineralölprodukten oder z.B. Rohöl handeln. Andere Beispiele für Flüssigkeiten sind z.B. Lösungsmittel, welche in der Farbindustrie zum Dispergieren von Pigmenten verwendet werden.

Das Verfahrsystem kann insbesondere elektrische Komponenten, wie einen elektrischen Motor, insbesondere Schrittmotor umfassen, welcher als Antrieb zum Verfahren der Heizung verwendet wird. Nach Betätigung eines Schalters kann das elektrische Verfahrsystem automatisch die Heizung nach oben verfahren, bis der die kreisförmige Öffnung begrenzende Rand der Lochplatte den Rundkolben von unten kreisförmig kontaktiert und bis die Andruckkraft den Schwellwert erreicht. Ein manueller Eingriff eines Anwenders nach Starten des (elektrischen) Antriebsystems braucht nicht erforderlich sein. Somit kann die Vorrichtung ausgebildet sein, nach Auflegen einer Lochplatte auf die Heizung, das Heizungssystem derart zu dem Kolben hin zu verfahren, dass daraufhin ohne weiteren manuellen Eingriffs eines Anwenders ein Test gemäß zumindest einem Standard zur Bestimmung von Verdampfungseigenschaften der Flüssigkeit vorbereitet und dann durchgeführt werden kann.

Das Verfahrsystem erfordert insbesondere keinen manuellen Eingriff eines Anwenders, um die Heizung (nach oben) zu verfahren, d.h. nach oben zu bewegen. Damit kann eine Fehlbedienung vermieden werden. Auch kann das (insbesondere elektrische) Verfahrsystem ausgebildet sein, die Heizung mit einer geeigneten Geschwindigkeit, z.B. mit konstanter Geschwindigkeit, welche eine Beschädigung von Komponenten vermeidet, zu bewegen. Das Verfahrsystem kann auch ausgebildet sein, z.B. bei relativ großem Abstand zwischen der Lochplatte und dem Kolben, zunächst eine relativ hohe Verfahrgeschwindigkeit vorzusehen, welche mit Verringern des Abstands zwischen der Lochplatte und dem Kolben kontinuierlich oder in Schritten verringert wird. Damit kann sowohl eine schnelle Vorbereitung erreicht werden, ohne ein Risiko einer Beschädigung zu beinhalten.

Falls gewisse verwendete Komponenten, insbesondere die Lochplatte und/oder der Behälter nicht kompatibel mit einem (insbesondere zuvor ausgewählten) Standardtest sind, kann die Vorrichtung diese Nichtkompatibilität akustisch und/oder optisch anzeigen. Ferner kann ein Durchführen eines standardisierten Tests in einem solchen Fall durch eine entsprechende Ansteuerung von weiteren im Normalbetrieb diesen Test unterstützenden Komponenten verhindert werden, wie etwa die Heizung selbst, Temperaturmesssystem, Auswertesystem, Anzeigesystem, etc.

Damit kann eine schnelle Vorbereitung eines standardisierten Tests erreicht werden und bei Verwendung fehlerhafter Komponenten kann eine Warnung angezeigt werden, so dass Bedienfehler, insbesondere ein Durchführen weiterer Testschritte in fehlerhafter Weise, verhindert werden können.

Gemäß der vorliegenden Erfindung umfasst das Verfahrsystem ein verfahrbares Trägersystem, von dem die Heizung gehaltert ist. Die Vorrichtung ist dabei ausgebildet, eine für eine Länge und/oder eine Position entlang eines Verfahrweges des Trägersystems indikative Größe, insbesondere Anzahl der Schritte eines Schrittmotors, zu überwachen und/oder zu bestimmen.

Das Trägersystem ist verfahrbar, insbesondere elektrisch verfahrbar, insbesondere vertikal nach oben bewegbar und insbesondere von einem elektrischen Motor zur Bewegung angetrieben. Das Trägersystem kann z.B. einen Arm, einen Stab, einen Tisch oder eine Kombination derselben umfassen, um z.B. die Heizung zu tragen, zu stützen bzw. zu haltern. Das Trägersystem kann mehrere Komponenten umfassen, z.B. eine Komponente, welche in Eingriff mit einem Antriebsmotor (z.B. indirekt über eine Spindel) steht und eine zweite Komponente, welche die Heizung haltert bzw. stützt. Die erste Komponente und die zweite Komponente müssen nicht durch eine starre Verbindung mechanisch verbunden sein, sondern können z.B. über eine elastische Verbindung, etwa eine Feder, insbesondere Spiralfeder verbunden sein, welche zur Kraftmessung herangezogen werden kann. Die Andruckkraft kann z.B. basierend auf einer Verformung einer Feder, etwa Spiralfeder gemessen werden oder beispielsweise über piezoelektrische Elemente. Der Schwellenwert kann gemäß der spezifischen Anwendung bzw. des standardisierten Tests eingestellt werden, etwa in Abhängigkeit des verwendeten Behälters und/oder der verwendeten Lochplatte oder kann für eine Anzahl verschiedener standardisierter Lochplatten und eine Anzahl von verschiedenen standardisierten Behältern anwendbar sein. Insbesondere kann der Schwellenwert einer vorgegebenen Andruckkraft gemäß einem vorbestimmten Teststandard entsprechen bzw. gleichen.

Während des Verfahrens des Trägersystems ändert sich die Position entlang des Verfahrweges des Trägersystems. Der Verfahrweg kann z.B. ein linearer, d.h. gerader Verfahrweg, etwa genau vertikal nach oben sein. Der Verfahrweg kann durch eine oder mehrere Schienen definiert sein und/oder durch eine Spindel, welche von einem Motor angetrieben wird. Die Andruckkraft kann eine Kraft in vertikaler Richtung zwischen der Lochplatte und dem Kolben bzw. Behälter sein.

Bevor das Trägersystem zusammen mit der Heizung und der Lochplatte zum (unteren Ende) des Behälters hin verfahren wird, kann der Behälter an einem oberen Ende durch ein oder mehrere Halterungselemente gehaltert (in fester Position) worden sein, ohne den unteren Behälterbereich, insbesondere Glasrundkolben, zu haltern. Der untere Teil des Behälters kann somit frei von weiteren Halterungselementen sein. Insbesondere kann ein Raum unterhalb des Behälters frei sein, so dass die Heizung zusammen mit der Lochplatte gefahrlos von unten an den Behälter herangeführt werden kann. Die Halterung am oberen Bereich des Behälters kann so stark sein, dass sie der Andruckkraft gemäß dem Schwellenwert widerstehen kann.

Die für die Position des Verfahrwegs des Trägersystems indikative Größe kann z.B. in einer Längeneinheit gegeben sein oder in einer Anzahl Umdrehungen eines Schrittmotors oder durch eine Spannung dargestellt werden oder ähnliches. Die Position kann z.B. relativ zu einer Bezugsposition, etwa Ausgangsposition, definiert sein, etwa durch eine Längenangabe in einer Längeneinheit, wie etwa Millimeter, oder durch Angabe einer Anzahl von Schritten oder Umdrehungen, welche von einem Schrittmotor oder einem anderen Elektromotor vollzogen wurden. Die für die Länge entlang des Verfahrweges des Trägersystems indikative Größe kann z.B. durch eine Differenz einer Bezugsposition und einer momentanen Position des Trägersystems bestimmt sein. Die Position des Trägersystems kann sich z.B. auf die Position einer bestimmten Komponente oder eines bestimmten Details des Trägersystems beziehen. Insbesondere kann sich die Position des Trägersystems entweder auf eine Position der ersten Komponente, welche primär durch einen Motor, insbesondere einen Elektromotor, verfahren wird oder auf eine Position einer zweiten Komponente, welche z.B. über ein elastisches Element elastisch mit der ersten Komponente des Trägersystems verbunden ist, beziehen.

Gemäß einer Ausführungsform der vorliegenden Erfindung ist die Vorrichtung ausgebildet, das Trägersystem ausgehend von einer Ausgangsposition, insbesondere einer vorbestimmten Anfangsposition, bis zu einer Endposition des Trägersystems zu verfahren, bei der die Andruckkraft den Schwellenwert erreicht, wobei die der Ausgangsposition zugeordnete für die Position entlang des Verfahrwegs indikative Größe einen ersten Wert hat und wobei die der Endposition zugeordnete für die Position entlang des Verfahrwegs indikative Größe einen zweiten Wert hat, wobei die Vorrichtung ausgebildet ist, die Differenz des ersten Wertes und des zweiten Wertes als für die dabei zurückgelegte Verfahrweglänge indikativen Differenzwert zu berechnen.

Die Endposition des Trägersystems kann demjenigen Zustand entsprechen, bei dem die Lochplatte vollständig an den Behälter herangefahren ist, so dass der Rand des Loches der Lochplatte den Behälter teilweise umgreift und eine Außenwand insbesondere kreisförmig kontaktiert. Über den Kontakt zwischen dem Rand des Loches und der Außenoberfläche des Behälters wird die Andruckkraft gemäß dem Schwellenwert in der Endposition vermittelt. Die Ausgangsposition kann irgendeine Position während des gesamten zuvor zurückgelegten Verfahrweges sein, kann insbesondere eine vordefinierte Anfangsposition sein. Die Ausgangsposition liegt niedriger als die Endposition. Zum Durchführen eines entsprechenden Vorbereitungsverfahrens ist das (elektrische) Verfahrsystem zumindest ausgebildet, die Heizung (zusammen mit der Lochplatte) nach oben zu verfahren.

Um die Lochplatte und/oder den Behälter wechseln zu können, zum Beispiel nach erfolgreichem Durchführen eines standardisierten Tests, kann das Verfahrsystem auch ausgebildet sein, die Heizung (zusammen mit der Lochplatte) wieder nach unten zu verfahren, insbesondere in die Ausgangsposition, insbesondere die Anfangsposition zurück. Die Geschwindigkeit der Rückfahrt kann zunächst relativ gering sein, um die Lochplatte langsam von dem Behälter zu lösen, was dessen Beschädigung vermeidet. Daraufhin kann die Geschwindigkeit der Rückfahrt erhöht werden, ohne weitere Komponenten schädigen zu müssen. In anderen Ausführungsformen ist die Geschwindigkeit während der Rückfahrt im Wesentlichen konstant. Sie kann jedoch z.B. schneller sein als die Geschwindigkeit während des Herauffahrens.

Der Differenzwert ist somit indikativ für eine Verfahrweglänge zwischen der Ausgangsposition und der Endposition. Insbesondere kann der Differenzwert bei Verwendung verschiedener Lochplatten verschieden sein, und/oder kann auch bei Verwendung verschiedener Behälter verschieden sein und kann insbesondere bei Verwendung verschiedener Kombinationen von Behältern und Lochplatten jeweils paarweise verschieden sein. Somit kann aufgrund eines bestimmten Differenzwertes unzweideutig die verwendete Kombination von Lochplatte und Behälter bestimmbar sein. Somit kann die Vorrichtung ausgebildet sein, das Vorhandensein bzw. Nichtvorhandensein einer Kompatibilität der verwendeten Kombination von Lochplatte und Behälter mit einem zuvor ausgewählten Standardtest zu bestimmen und bei nicht vorhandener Kompatibilität z.B. eine Warnung auszugeben. Somit kann vermieden werden, einen bestimmten standardisierten Test mit falschen Komponenten durchzuführen.

Gemäß einer Ausführungsform der vorliegenden Erfindung ist die Vorrichtung ferner ausgebildet basierend auf dem Differenzwert, insbesondere ferner basierend auf einem Typ und/oder einer Größe und/oder einem Identifikator des Behälters, auf einen Typ und/oder Größe und/oder einen Identifikator der Lochplatte zurückzuschließen und/oder über ein akustisches und/oder optisches Anzeigesystem anzuzeigen; und/oder basierend auf dem Differenzwert auf einen Typ und/oder Größe und/oder einen Identifikator der Lochplatte zurückzuschließen und/oder über ein akustisches und/oder optisches Anzeigesystem anzuzeigen und/oder auf einen Typ und/oder eine Größe und/oder einen Identifikator des Behälters zurückzuschließen und/oder über ein akustisches und/oder optisches Anzeigesystem anzuzeigen.

Der Typ des Behälters kann z.B. durch eine Typbezeichnung, etwa Hersteller und Modell definiert sein. Die Größe kann z.B. durch einen Durchmesser des kugelförmigen Rundkolbens oder durch das Volumen bzw. das Fassungsvermögen des Behälters definiert sein. Ein Identifikator des Behälters kann eine eindeutige Kennzeichnung des Behälters umfassen. Ähnlich können diese Größen für die Lochplatte definiert sein. Die Größe der Lochplatte kann z.B. durch eine Größe, z.B. Durchmesser der kreisförmigen Aussparung innerhalb der Lochplatte, definiert sein. Die Vorrichtung kann somit zumindest derart ausgebildet sein, dass aus einem bestimmten Verfahrweg oder insbesondere aus zumindest einer für den Verfahrweg indikativen Größe und insbesondere basierend auf dem Differenzwert zu bestimmen, ob eine Lochplatte auf der Heizung platziert wurde, welche mit einem einer Mehrzahl von standardisierten Tests kompatibel ist, welcher vorherig ausgewählt werden kann.

Gemäß einer Ausführungsform der vorliegenden Erfindung ist die Vorrichtung ferner ausgebildet: einen Benutzer einen gewünschten durchzuführenden Test aus einer Auswahl an standardisierten Tests auswählen zu lassen; und/oder dem Benutzer zu erlauben, eine ausgewählte Lochplatte auf die Heizung aufzusetzen; und/oder nach Verfahren des Heizsystems bis zur Unterbrechung eine Warnung anzuzeigen, falls die bestimmte Lochplatte und/oder die zurückgelegte Verfahrweglänge nicht kompatibel mit dem ausgewählten Test ist. Somit kann sichergestellt werden, dass der ausgewählte gewünschte standardisierte Test tatsächlich mit den diesem Test zugeordneten Komponenten durchgeführt wird.

Gemäß einer Ausführungsform der vorliegenden Erfindung weist das Verfahrsystem einen elektrischen Schrittmotor und eine, insbesondere entlang (bzw. parallele) einer Schiene angeordnete (bzw. dazu parallele), Spindel auf, die vom Schrittmotor angetrieben wird bzw. antreibbar ist. Somit können herkömmlich verfügbare Komponenten zur Implementierung des Verfahrens eingesetzt werden und zur Implementierung der Vorrichtung eingesetzt werden. Ein Schrittmotor kann ausgebildet sein, einen definierten Bewegungsschritt gezielt ausführen zu können, wobei der Bewegungsschritt eine Drehung in einem bestimmten Winkelbereich umfasst. Ein Schritt des Schrittmotors kann dann einer Rotation der Spindel um einen bestimmten Winkelbereich entsprechen, wobei dieser Winkelbereich nicht notwendigerweise gleich dem Winkelbereich sein muss, welcher von dem Motor bei der Bewegung eines Schrittes durchgeführt wurde. Optional kann ein Gewinde zwischen dem Schrittmotor und der Spindel vorgesehen sein. Eine weitere mit der Spindel in Eingriff stehende Komponente, etwa eine Zahnschiene, kann bei Drehung der Spindel eine lineare Bewegung entlang des Verfahrweges, d.h. insbesondere vertikal nach oben ausführen. Ein Schritt des Motors kann somit einer definierten Verschiebung, d.h. einem definierten Verschiebungsweg oder einer definierten Verschiebungsweglänge entlang der Spindel entsprechen. Somit kann z.B. basierend auf einer überwachten Anzahl der Schritte des Elektromotors auf eine Verschiebungsweglänge der Zahnschiene geschlossen werden. Die Zahnschiene kann z.B. das Trägersystem verfahren, bzw. mit dem Trägersystem verbunden sein.

Insbesondere kann das Trägersystem ein Trageelement aufweisen, von dem die Heizung getragen ist, und ferner ein Verfahrelement aufweisen, das zum Antrieb in Eingriff mit der Spindel steht und insbesondere von der Schiene geführt wird. Ferner kann das Trägersystem eine Kraftmesseinrichtung aufweisen, über die das Tragelement mit dem Verfahrelement gekoppelt ist. Insbesondere kann das Verfahrelement eine Zahnschiene umfassen, welche in Eingriff mit der Spindel steht und eine Rotationsbewegung der Spindel in eine geradlinige Bewegung umsetzt. Das Tragelement ist nicht in einer starren mechanischen Verbindung mit dem Verfahrelement, sondern über ein elastisches Element (z.B. innerhalb der Kraftmesseinrichtung umfasst) verbunden. Die Messung des Verfahrweges bzw. die Messung der für die Position und/oder die Länge des Verfahrweges indikativen Größe kann sich auf die Messung dieser Parameter des Tragelements und/oder des Verfahrelements beziehen. Insbesondere kann das Verfahrelement dafür herangezogen werden, da es primär (d.h. direkt über starr mechanische Elemente) mittels des Motors verfahren wird. Das Tragelement wird lediglich indirekt vermittels der Kraftmesseinrichtung und das Verfahrelement verfahren. Das Tragelement kann somit federnd mit dem Verfahrelement verbunden sein. Wenn das Trägersystem derart ausgebildet ist, ist neben einer Verfahrung der Heizung auch eine Kraftmessung ermöglicht, um eine definierte Andruckkraft zwischen der Lochplatte und dem Behälter einstellen zu können, aber gleichzeitig eine Beschädigung oder Zerstörung von Komponenten zu vermeiden.

Gemäß einer Ausführungsform der vorliegenden Erfindung weist die Kraftmesseinrichtung auf: eine Feder, deren eines Ende an dem Verfahrelement und deren anderes Ende an dem Tragelement angebracht ist; eine Lichtschranke, gekoppelt mit dem Schrittmotor, wobei die Feder bei dem Schwellenwert der Kraft um eine definierte Strecke gestaucht wird, wodurch die Lichtschranke auslöst, um das Verfahrsystem zum Anhalten zu bringen.

Die Feder kann z.B. eine Spiralfeder oder eine Blattfeder oder eine Kombination derselben umfassen. Die Feder stellt ein elastisches Element dar, welches das Verfahrelement mit dem Tragelement verbindet. Zunächst kann der Rand der Aussparung der Lochplatte eine Außenoberfläche eines unteren Teils des Behälters berühren, wenn die Heizung soweit an den Behälter herangeführt worden ist. Die Vorrichtung verfährt nun weiterhin die Heizung mit aufgelegter Lochplatte nach oben, so dass der Rand der Aussparung der Lochplatte mit immer höherer Kraft an den Außenrand des Behälters angedrückt wird, weswegen die Feder zunehmend verformt, insbesondere gestaucht wird. Mit zunehmender Stauchung der Feder kann sich ein Schaltblech einer Lichtschranke nähern und bei genügend starker Stauchung die Lichtschranke unterbrechen. Die Stauchung der Feder, insbesondere der Stauchungsweg kann mit der Andruckkraft über einen linearen Zusammenhang (Hooksches Gesetz) verbunden bzw. verknüpft sein. Dies kann durch Kennlinien bzw. vorheriges Kalibrieren der Feder bestimmt werden. Bei Unterbrechung der Lichtschranke kann die Energiezufuhr an den Schrittmotor unterbrochen werden oder es kann optional eine Bremse eingesetzt werden. Damit kann die Zielposition bzw. der Zielzustand in der Endposition des Trägersystems erreicht sein. Es können weitere Fixierungsmaßnahmen getroffen werden, etwa Magnetfixierung oder mechanische Fixierung, Bremse, etc., um den so erreichten Zustand der geforderten Andruckkraft aufrechtzuerhalten. Sodann kann, falls das System keine Warnung ausgibt, ein standardisierter Test durchgeführt werden mit der Gewissheit, dass erforderliche Testbedingungen vorliegen.

In einer alternativen Ausführungsform kann anstelle einer Feder ein Elastomer als elastisches Element verwendet werden.

Gemäß der vorliegenden Erfindung ist die Lochplatte und/oder der Behälter kompatibel sind mit mindestens einem der nachfolgenden standardisierten Tests: ASTM D86, ASTM D850, ASTM D1078 oder ISO 1078, jeweils zumindest in der am Anmeldetag gültigen Version.

Die Lochplatte und/oder der Behälter können in einer allgemeinen Weise mit folgenden Normen bzw. standardisierten Tests kompatibel sein:
die Normen ASTM D86, ISO 3405, IP 123, BS200-123, JIS K 2254, GOST 2177 für die Destillation von Kraftstoffen;
die Normen ASTM D1078, IP195, BS2000-195, ASTM D850, ISO 918, BS 4591, JIS K 0066, ISO 4626 für die Destillation von Lösungsmitteln; sowie
die Normen ASTM D524, IP 14, BS2000-14, ISO 4262, ASTM D4530, ISO 10370 für die Bereitstellung des Destillationsrückstandes zur Bestimmung des Koksrückstandes.

Gemäß einer Ausführungsform der vorliegenden Erfindung ist bereitgestellt ein Flüssigkeitsanalysesystem insbesondere Automatische Destillations-Einheit, zum Bestimmen von Verdampfungseigenschaften der Flüssigkeit gemäß zumindest einem standardisierten Test, aufweisend: eine Vorrichtung zur Vorbereitung einer Destillationsmessung einer Flüssigkeit gemäß einem der Ansprüche 1 bis 6, wobei die Öffnung des Behälters insbesondere mit einem zu einem Kondensator führenden Zweig ausgestattet ist; und eine Vorrichtung zum Verschließen des Behälters mit: zumindest einem Temperaturmesssystem, insbesondere zum Messen einer Dampftemperatur der Flüssigkeit innerhalb des Behälters, mit einem Stab und einem Temperaturmessfühler; einem Verschlussteil zum Verschließen des Behälters mit einer Durchgangsöffnung, durch die ein Teil des Stabes derart geführt ist, dass der Temperaturmessfühler innerhalb des Behälters angeordnet ist; optional einem oberhalb des Verschlussteils quer zur Längsrichtung des Stabes über den Verschlussteil hervorragender Stützteil, der mit einem Gegenstück einer Hilfsvorrichtung ineinanderschiebar ist; eine Vorrichtung zur Vorbereitung einer Destillationsmessung einer Flüssigkeit gemäß einem der vorangehenden Ansprüche; und insbesondere mehrere standardisierte Lochplatten, die auf die Heizung aufsetzbar sind.

Das Temperaturmesssystem kann ein oder mehrere Temperaturmessfühler aufweisen, z.B. einen Temperaturmessfühler, insbesondere Pt100-Messfühler, welcher zur Bestimmung der Temperatur in einer Gasphase der Flüssigkeit ausgebildet ist, insbesondere an einer bestimmten Position innerhalb des Behälters. Dazu kann die vertikale Position des ersten Temperaturmessfühlers einstellbar sein, insbesondere durch einen Schraubmechanismus. Ein weiterer zweiter Messfühler kann zur Messung einer Temperatur am Boden des Behälters vorgesehen sein, um zum Beispiel einen Trockenpunkt bestimmen zu können.

Der Verschlussteil kann den Behälter dampfdicht verschließen, gleichzeitig jedoch die Temperaturmessungen unterstützen. Die Vorrichtung zum Verschließen des Behälters kann weiterhin innerhalb eines Innenraums, welcher durch ein Gehäuse begrenzt ist, Auswerteelektronik und einen elektronischen Speicher aufweisen, um z.B. Kalibrierdaten von einem oder mehreren Temperaturmessfühlern speichern zu können und/oder um eine Vorprozessierung von Messdaten, etwa eine Konvertierung in digitale Signale zu ermöglichen. Ferner kann eine Kommunikationsschnittstelle innerhalb einer elektronischen Schaltung innerhalb eines Innenraums der Vorrichtung zum Verschließen vorgesehen sein, um die insbesondere digitalen Messdaten drahtlos bzw. drahtgebunden an eine Auswerteeinheit außerhalb zu übertragen.

Der optionale Stützteil kann bei in die Behälteröffnung eingeschobener Vorrichtung zum Verschließen des Behälters den gesamten Behälter haltern und stützen. Insbesondere kann der Stützteil bei vollständig in die Behälteröffnung eingeschobener Vorrichtung zum Verschließen des Behälters den Behälter in einer definierten (insbesondere vertikalen) Position haltern. Für diese definierte vertikale Position des Behälters kann ein definierter Verfahrweg bzw. eine definierte vorbekannte Verfahrweglänge des Verfahrens der Lochplatte zu dem Behälter hin für eine bestimmte Kombination von Lochplatte und/oder Behälter vorbekannt sein. Entspricht die tatsächliche Verfahrlänge nach vollständigem Heranfahren der Heizung an die Unterseite des Behälters nicht dieser vorbekannten Verfahrlänge, kann darauf geschlossen werden, dass eine Fehlbestückung vorliegt, etwa dass eine fehlerhafte Lochplatte und/oder ein fehlerhafter Behälter verwendet wurde. Dies kann einem Anwender angezeigt werden, woraufhin dieser die Lochplatte und/oder den Behälter gegen die korrekten Komponenten austauschen kann.

Es sollte verstanden werden, dass Merkmale, welche im Zusammenhang mit einer Vorrichtung zur Vorbereitung einer Destillationsmessung einer Flüssigkeit oder im Zusammenhang mit einem Flüssigkeitsanalysesystem, individuell in irgendeiner Kombination, beschrieben, erläutert oder bereitgestellt wurden, ebenso, individuell in irgendeiner Kombination, auf ein Verfahren zur Vorbereitung einer Destillationsmessung einer Flüssigkeit angewendet werden können und umgekehrt, gemäß Ausführungsformen der vorliegenden Erfindung.

Gemäß der vorliegenden Erfindung ist ein
Verfahren zur Vorbereitung einer Destillationsmessung einer Flüssigkeit gemäß Anspruch 8 bereitgestellt. Das Verfahren weist auf: Auswählen einer Lochplatte aus einer Gruppe von Lochplatten; Aufsetzen der Lochplatte auf eine Heizung, die zum Heizen eines die Flüssigkeit enthaltenen, auf die Lochplatte aufgesetzten Behälters zum Durchführen eines standardisierten Tests zur Bestimmung von
Verdampfungseigenschaften der Flüssigkeit ausgebildet ist, wobei der Behälter mit einer Öffnung ausgestattet ist; Verfahren der Heizung (z.B. nach oben) zum Behälter hin; Unterbrechen des Verfahrens,
falls eine Andruckkraft der auf die Heizung aufgesetzten Lochplatte gegen den Behälter einen Schwellenwert erreicht. Das Verfahrsystem umfasst ein verfahrbares Trägersystem, von dem die Heizung gehaltert ist, und ferner das Überwachen und/oder Bestimmen einer für eine Länge und/oder Position (z) entlang eines Verfahrwegs des Trägersystems indikativen Größe, insbesondere Anzahl der Schritte eines Schrittmotors.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt, sondern nur auf die Merkmalskombination der Ansprüche.

### Kurze Beschreibung der Zeichnungen

Fig. 1 illustriert in einer schematischen Seitenansicht Flüssigkeitsanalysesystem mit einer Vorrichtung zur Vorbereitung einer Destillationsmessung einer Flüssigkeit gemäß einer Ausführungsform der vorliegenden Erfindung; und
Fig. 2 illustriert in einer Seitenansicht schematisch ein Flüssigkeitsanalysesystem gemäß einer Ausführungsform der vorliegenden Erfindung.

### Detaillierte Beschreibung von Ausführungsformen

Elemente, welche gleiche oder ähnliche Struktur und/oder Funktion haben, sind in den verschiedenen Figuren durch Bezugszeichen bezeichnet, welche sich lediglich in der ersten Ziffer unterscheiden. Die Beschreibung von Elementen, welche in einer Figur nicht im Detail beschrieben sind, können der Beschreibung dieser entsprechenden Elemente einer anderen Figur entnommen werden.

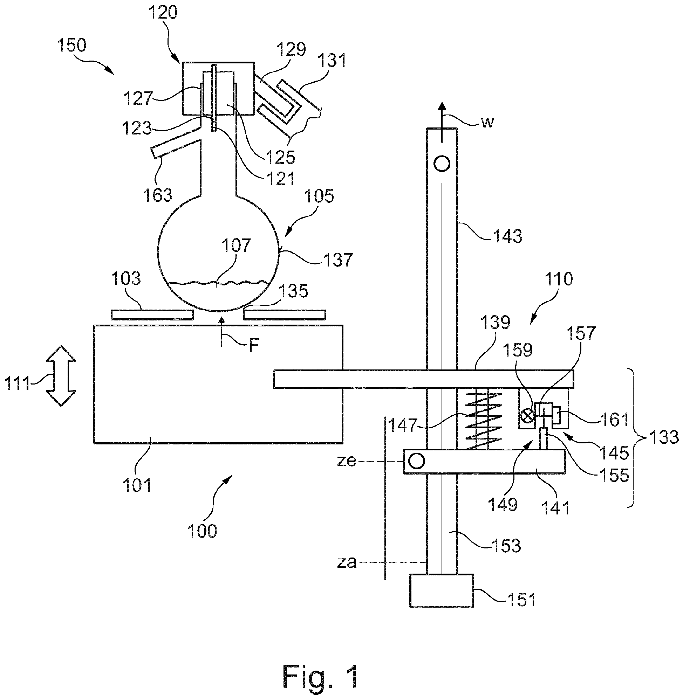

Fig. 1 illustriert schematisch ein Flüssigkeitsanalysesystem 150 mit einer Vorrichtung 100 zum Vorbereiten einer Destillationsmessung einer Flüssigkeit gemäß einer Ausführungsform der vorliegenden Erfindung. Das Flüssigkeitsanalysesystem 150 umfasst eine Vorrichtung 100 zur Vorbereitung einer Destillationsmessung einer Flüssigkeit gemäß einer Ausführungsform der vorliegenden Erfindung. Die Vorrichtung 100 umfasst eine Heizung 101, z.B. eine elektrische Heizung mit Heizwendeln, auf die eine Lochplatte 103 ausgewählt aus einer Gruppe standardisierter Lochplatten aufsetzbar ist, insbesondere an einer Oberseite der Heizung 101. Ferner ist die Heizung 101 zum Heizen eines die Flüssigkeit enthaltenen auf die Lochplatte 103 aufgesetzten Behälters 105 zum Durchführen eines standardisierten Tests zur Bestimmung von Verdampfungseigenschaften der Flüssigkeit ausgebildet. Die zu untersuchende Flüssigkeit 107 befindet sich in dem Behälter 105, der in der illustrierten Ausführungsform als Glasrundkolben ausgebildet ist.

Die Vorrichtung 100 umfasst ferner ein elektrisches Verfahrsystem 110, das ausgebildet ist, die Heizung 101 (insbesondere zusammen mit der Lochplatte 103) vertikal nach oben entlang einer vertikalen Richtung 111 zu verfahren und ein weiteres Verfahren des Heizsystems zu unterbrechen, falls eine Andruckkraft F der auf die Heizung 101 aufgesetzten Lochplatte 103 gegen den Behälter 105 einen Schwellenwert erreicht.

Der Behälter 105 ist an seinem oberen Ende durch eine Vorrichtung 120 zum Verschließen des Behälters verschlossen, welche in Fig. 1 lediglich schematisch illustriert ist. Die Vorrichtung 120 verschließt den Behälter 105, insbesondere eine obere Öffnung des Behälters dampfdicht und ermöglicht ferner eine Temperaturmessung mittels mindestens eines Temperaturmessfühlers 121, welcher am Ende eines Stabes 123 vorgesehen ist. Der Stab ist vollständig durch einen Verschlussteil 125 der Vorrichtung 120 geführt, wobei der Verschlussteil 125 mit einer Außenoberfläche an einer inneren Oberfläche einer Öffnungswandung 127 des Behälters 105 dicht anliegt.

Die Vorrichtung 120 umfasst ferner einen Stützteil 129, welcher seitlich nach unten geneigt hervorsteht und mit einem Gegenstück 131 einer weggebrochen dargestellten Hilfseinrichtung verbunden ist, insbesondere formschlüssig verbunden ist, um die Vorrichtung 120 zum Verschließen des Behälters samt dem Behälter 105 zu haltern.

Das Verfahrsystem 110 umfasst ein Trägersystem 133, von dem die Heizung 101 gehaltert ist. Die Vorrichtung 100 ist ausgebildet, eine für eine Länge und/oder Position z entlang eines Verfahrweges w des Trägersystems 133 indikative Größe zu überwachen und/oder zu bestimmen.

Die Vorrichtung 100 ist ferner ausgebildet, das Trägersystem 133 ausgehend von einer Ausgangsposition za bis zu einer Endposition ze des Trägersystems zu verfahren, bei der die Andruckkraft F den Schwellenwert erreicht. In Fig. 1 ist der Zustand illustriert, bei dem das Trägersystem in der Endposition ze befindlich ist, bei der die Andruckkraft F den Schwellenwert erreicht. In diesem Zustand übt der kreisförmige Rand 135 der Lochplatte 103 die Andruckkraft F auf eine kreisförmige Kontaktfläche an der Außenoberfläche 137 des Behälters 105 aus.

Bei der Ausgangsposition za hat die zugeordnete für die Position entlang des Verfahrwegs indikative Größe einen ersten Wert, z.B. w1, und die der Endposition ze zugeordnete für die Position entlang des Verfahrwegs w indikative Größe hat einen zweiten Wert, z.B. w2. Die Vorrichtung 100 ist ferner ausgebildet, die Differenz des ersten Werts w1 und des zweiten Werts w2 als für die dabei zurückgelegte Verfahrweglänge indikativen Differenzwert w2-w1 zu berechnen. Der Differenzwert kann z.B. der Anzahl von Schritten eines Schrittmotors gleichen bzw. entsprechen, welche von einem Schrittmotor zwischen der Ausgangsposition za und der Endposition ze zurückgelegt wurden. Basierend auf dem Differenzwert können z.B. der Typ und/oder die Größe der Lochplatte bestimmbar sein.

Das Trägersystem 133 umfasst ein Tragelement 139, von dem die Heizung 101 getragen wird. Das Tragelement kann z.B. als ein Tisch und/oder als ein Arm und/oder als ein Stab ausgebildet sein, an dem die Heizung 101 geeignet gehaltert bzw. aufgesetzt ist. Das Trägersystem 133 umfasst ferner ein Verfahrelement 141, das zum Antrieb in Eingriff mit einer Spindel 153 steht, welche entlang einer Schiene 143 angeordnet ist. Ferner wird das Verfahrelement von der in vertikaler Richtung 111 ausgerichteten Schiene 143 geführt, entlang der der Verfahrweg w verläuft.

Das Trägersystem 133 umfasst ferner eine Kraftmesseinrichtung 145, über die das Tragelement 139 mit dem Verfahrelement 141 gekoppelt ist. Das Verfahrelement kann z.B. als ein Verfahrarm oder als ein Verfahrtisch ausgebildet sein. Nur das Verfahrelement 141 steht, z.B. über eine Zahnschiene, mit der in oder bei der vertikalen Schiene 143 angeordneten Spindel in Eingriff, nicht jedoch das Tragelement 139. Das Tragelement 139 und somit die Heizung 101 wird lediglich sekundär vermittels der Kraftmesseinrichtung 145 bei Verfahren des Verfahrelements 141 indirekt bzw. sekundär verfahren.

Die Kraftmesseinrichtung 145 weist eine Feder 147 auf, deren eines Ende an dem Verfahrelement 141 und deren anderes Ende an dem Tragelement 139 angebracht ist. Ferner umfasst die Kraftmesseinrichtung 145 eine Lichtschranke 149, welche mit einem Schrittmotor 151 gekoppelt ist, welcher die Spindel 153 antreibt. Ein Unterbrechungselement 155 der Lichtschranke 149 unterbricht einen Lichtstrahl 157, welcher von einer Lichtquelle 159 ausgesendet wird, um nicht von einem Detektor 161 detektiert zu werden, falls die Feder 147 soweit gestaucht ist, dass der Schwellwert der Andruckkraft F erreicht ist. Fig. 1 illustriert diesen Zustand, indem das Unterbrechungselement 155 zwischen der Lichtquelle 159 und dem Detektor 161 angeordnet ist, woraufhin der Motor 151 angesteuert wird, eine weitere Bewegung anzuhalten.

Das Gegenstück 131 des Stützelements 129 der Vorrichtung 120 zum Verschließen des Behälters 105 kann an der Schiene 143 angebracht sein oder kann an einer weiteren Hilfsvorrichtung angebracht sein. Vorteilhaft ist jedoch eine Anbringung bzw. feste mechanische Verbindung zwischen dem Gegenstück 131 und der Schiene 143, um den Behälter in eine definierte vorbestimmte Position relativ zu dem elektrischen Verfahrsystem 110 zu bringen.

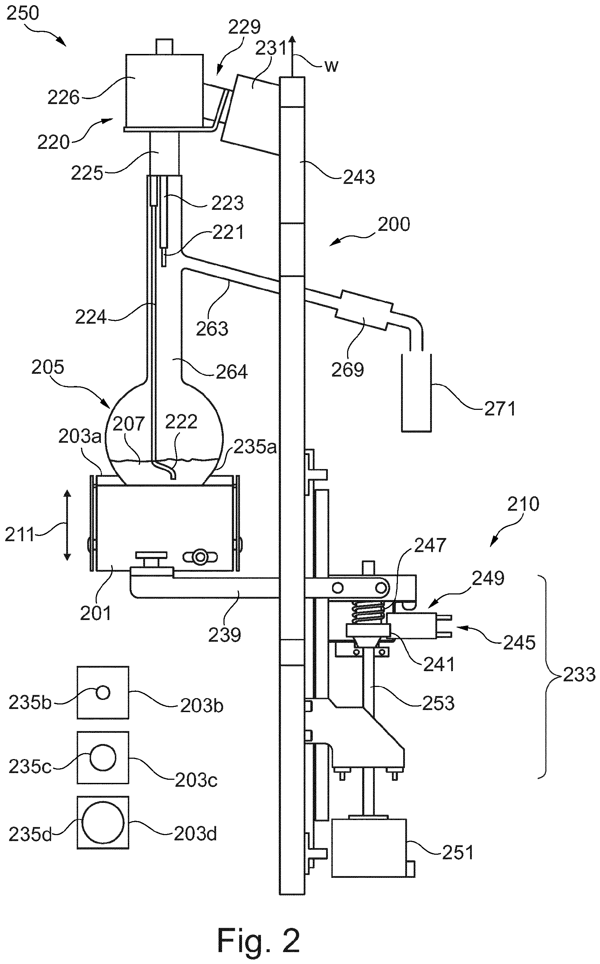

Fig. 2 illustriert schematisch ein Flüssigkeitsanalysesystem 250 gemäß einer Ausführungsform der vorliegenden Erfindung, welches eine Vorrichtung 200 zum Vorbereiten einer Destillationsmessung einer Flüssigkeit umfasst.

Das Flüssigkeitsanalysesystem 250, welches in Fig. 2 illustriert ist, hat Ähnlichkeiten zu dem Flüssigkeitsanalysesystem 150, welches in Fig. 1 illustriert ist. Das Flüssigkeitsanalysesystem 250 ist insbesondere als eine Automatische Destillations-Einheit ausgebildet, zum Bestimmen von Verdampfungseigenschaften der Flüssigkeit, welche sich in dem Behälter 205 befindet, gemäß zumindest einem standardisierten Test. Das Flüssigkeitsanalysesystem 250 umfasst den Behälter 205 mit einer Öffnung an einem oberen Ende und insbesondere mit einem zu einem Kondensator 269 führenden Zweig 263. In dem Behälter 205 ist die zu untersuchende Flüssigkeit 207 enthalten.

Ferner umfasst das Flüssigkeitsanalysesystem 250 eine Vorrichtung 220 zum Verschließen des Behälters 205. Diese Vorrichtung 220 umfasst zumindest ein Temperaturmesssystem, insbesondere zum Messen einer Dampftemperatur der Flüssigkeit innerhalb des Behälters 205 in einem Innenraum 264. Dabei umfasst das Temperaturmesssystem einen Stab 223 mit einem Temperaturmessfühler 221 an einem unteren Ende, so dass dieser innerhalb des Behälters in dem Innenraum 264 angeordnet ist und zwar insbesondere in vertikaler Höhe derart eingestellt bzw. einstellbar ist, dass er in etwa auf der Höhe des Zweiges 263 befindlich ist, welcher zu dem Kondensator 269 führt, welcher nur schematisch illustriert ist. Das in dem Kondensator 269 erzeugte Kondensat wird in einem Auffangzylinder 271 aufgefangen, wobei das Auffangvolumen gemessen wird.

Die Vorrichtung 220 umfasst ferner einen Verschlussteil 225 zum Verschließen des Behälters, wobei der Verschlussteil 225 eine nicht illustrierte Durchgangsöffnung aufweist, durch die ein Teil des Stabes 223 geführt ist, so dass der Temperaturmessfühler 221 innerhalb des Behälters angeordnet ist, insbesondere nahe der Abzweigung 263.

Auch die Vorrichtung 220 umfasst einen oberhalb des Verschlussteils 225 quer zur Längsrichtung des Stabes 223 hervorstehenden Stützteil 229, der mit einem Gegenstück 231 ineinander schiebbar ist. In der in Fig. 2 illustrierten Ausführungsform ist das Gegenstück 231 fest mit der Schiene 243 verbunden, entlang derer der Verfahrweg w verläuft, entlang dem die Heizung 201 zusammen mit der Lochplatte 203 verfahrbar ist.

Das Flüssigkeitsanalysesystem 250 umfasst somit auch die Vorrichtung 200 zur Vorbereitung einer Destillationsmessung der Flüssigkeit und insbesondere mehrere standardisierte Lochplatten, die auf die Heizung aufsetzbar sind. Beispielhaft sind neben der auf die Heizung 201 aufgesetzten Lochplatte 203a weitere Lochplatten 203b, c und d illustriert, welche zentrale Öffnungen bzw. Löcher verschiedener Größe aufweisen.

Zum Verfahren (Bewegen) der Heizung mit der Lochplatte ist ein Verfahrsystem 210 vorgesehen. Das Verfahrsystem 210 umfasst einen elektrischen Schrittmotor 251, der ein Verfahrelement 241 verfährt, welches über eine Feder 247 mit einem Tragelement 239 verbunden ist. Die Feder ist zusammen mit einer Lichtschranke 249 Teil einer Kraftmesseinrichtung 245, welche eine ähnliche Funktion hat wie mit Bezug auf Fig. 1 erläutert ist. Eine nicht illustrierte Zahnschiene verwandelt eine Drehbewegung einer Spindel, welche von dem Schrittmotor 251 angetrieben wird, in eine gradlinige Bewegung entlang des Verfahrweges w.

Gemäß Ausführungsformen der vorliegenden Erfindung ist ein automatisiertes Verfahren bereitgestellt, bei dem der Benutzer wie gewohnt die Lochplatte auswählt, etwa eine der Lochplatten 203a, 203b, 203c, 203d, die in Fig. 2 illustriert sind. Im nächsten Schritt wird die ausgewählte Lochplatte auf die Heizung 201 aufgelegt und ein automatisches Hochfahren wird gestartet. Dabei wird die Heizung zusammen mit der ausgewählten Lochplatte, z.B. 203a, voll automatisch von einem Lift (bzw. Verfahrsystem 210) an den Kolben bzw. im Allgemeinen den Behälter 205 herangeschoben bzw. herangefahren. Eine Feder 247 wird, sobald die Lochplatte am Kolben ansteht, gestaucht. Wird ein Schwellwert der Federkraft F erreicht bzw. überschritten (was indirekt über eine Wegmessung mit einer Lichtschranke 249 bestimmt wird), so wird die Bewegung des Lifts bzw. des Verfahrsystems gestoppt. Eine Beschädigung des Kolbens wird dadurch vermieden. Gleichzeitig wird über den Verfahrweg (d.h. die bis dahin erfolgten Schritte des Schrittmotors, z.B.) auf den Durchmesser des Loches innerhalb der ausgewählten Lochplatte 203a zurückgerechnet und erkannt, ob die korrekte Lochplatte ausgewählt wurde, um einen zuvor spezifizierten standardisierten Test durchzuführen.

Ausführungsformen eines Flüssigkeitsanalysesystems können ausgebildet sein, standardisierte Tests gemäß den Normen ASTM D86, ASTM D850, D1078 oder ISO 1078 durchzuführen. Insbesondere schreiben diese Normen vier Lochplatten mit vier unterschiedlich großen Innendurchmessern der Öffnungen vor. Die Heizung wird samt Lochplatte von unten an den Kolben herangeführt. Dabei muss die Lochplatte dicht mit dem Kolben abschließen. Dies wird sichergestellt, indem mit der Heizung leicht gegen den Kolben gedrückt wird. Dabei besteht in herkömmlichen Vorrichtungen und Verfahren die Gefahr, dass bei zu viel Druck der Kolben beschädigt wird, z.B. Glasbruch. Wählt der Benutzer oder Anwender versehentlich die falsche Lochplatte aus, so darf der Test nicht durchgeführt werden.

Die Temperatur des Dampfes wird in Ausführungsformen der vorliegenden Erfindung mit Hilfe eines Pt100-Temperatursensors (z.B. der Sensor 221, welcher in Fig. 2 illustriert ist) gemessen. Dabei ist der Temperatursensor 221 über einen Stab 223 durch den Verschlussteil 225 geführt. Ferner umfasst die Vorrichtung 220 zum Verschließen des Behälters neben dem Temperaturmessfühler 221 einen weiteren Temperaturmessfühler 222, der die Temperatur an einem Boden des Behälters misst, wobei der weitere Temperaturmessfühler 222 über einen weiteren Stab 224 Messsignale in einen Innenraum 226 innerhalb der Vorrichtung 220 übermittelt, in welchem z.B. eine elektronische Schaltung aufgenommen ist, um die Messsignale, und auch die Messsignale des (ersten) Temperaturmessfühlers 221 vor zu verarbeiten und insbesondere eine Kalibration vorzunehmen, und insbesondere auch eine Wandlung in digitale Signale vornehmen kann. Über nicht im Detail illustrierte elektrische Verbindungen zwischen dem Stützteil 229 und dem Gegenstück 231 werden die insbesondere digitalen Messsignale an eine nicht im Detail illustrierte Auswerteeinheit übermittelt. Mittels des weiteren Temperaturmessfühlers 222 kann z.B. ein Trockenpunkt bestimmt werden, d.h. ein Punkt, wenn der letzte Rest der Flüssigkeit innerhalb des Behälters verdampft ist, da in diesem Fall die Temperatur am Boden des Behälters stark ansteigt.

Ausführungsformen der vorliegenden Erfindung ermöglichen es ferner, Bedienungsfehler zu vermeiden und insbesondere vor Start einer Destillationsmessung gemäß einem standardisierten Test zu prüfen, ob immer die jeweils normgerechte und mit dem ausgewählten Test kompatible Lochplatte eingesetzt wurde.

Dazu kann gemäß Ausführungsform der vorliegenden Erfindung der Anwender in einer automatisierten Einheit je nach Flüssigkeitsprobe bzw. Destillationsprogramm eine der vier von der Norm vorgeschriebenen Lochplatten auswählen und ferner den zugehörigen Kolben bzw. Behälter auswählen und eine Messung starten. Ein Lift führt dann die Lochplatte von unten an den Kolben heran und drückt sie mit definierter Kraft an den Kolben, um den Spalt exakt abzudichten.

Der Behälter 105 und die auf der Heizung 101 liegende Lochplatte 103 werden gegeneinander gepresst. Dazu wird der Lift (bzw. das Tragelement 139) von einem Schrittmotor 151 bewegt, der über einen Spindelantrieb 153 die Aufnahme der Heizung 101 entlang der Führungsschiene 143 bewegt. An den beiden Endpunkten befinden sich Endschalter, so dass der Verfahrweg des Lifts klar definiert ist. Über die Schrittauflösung und die Steigung der Spindel ist die Auflösung des Verfahrweges bestimmt. Die Kraftmessung erfolgt mit Hilfe einer Feder 147 und einer Lichtschranke 149 mit Schaltblech 155. Das Stoppen des Lifts bei einer bestimmten Kraft erfolgt über das Stauchen einer Feder mit definierter Federkonstante. Nach dem Hookschen Gesetz (F=D×ΔL) entspricht das Stauchen um die Länge ΔL (z.B. 5 mm) bei fester Federkonstante D (z.B. 0,5 N/mm) genau der Kraft F. Das Stoppen erfolgt mit Hilfe einer Lichtschranke, die nach einer Länge von ΔL auslöst, so dass das Anpressen der Heizung an den Kolben mit definierter Kraft F sichergestellt ist. Wenn die Lochplatte somit von unten an den Kolben herangeführt wird, erhöht sich die (über den Weg ΔL gemessen) Federkraft. Wird ein Schwellwert überschritten, so wird die Bewegung gestoppt. Anhand der Anzahl der bis dahin zurückgelegten Schritte des Schrittmotors wird auf den Lochdurchmesser bzw. die entsprechende Lochplatte zurückgeschlossen.

Beispielhaft führt die folgende Tabelle 1 für verschiedene bestimmte Verfahrwege dar, welche Kombination von Kolben und Lochplatte dazu korrespondiert.

**Tabelle 1:**

| **Kolben** | **Lochplatte** | **Verfahrweg** |
|---|---|---|
| 125 ml | 50 | 28 mm |
| 125 ml | 38 | 25 mm |
| 125 ml | 32 | 23 mm |
| 125 ml | 25 | 20 mm |
| 200 ml | 50 | 38 mm |
| 200 ml | 38 | 35 mm |
| 200 ml | 32 | 33 mm |
| 200 ml | 25 | 30 mm |

Für die in Tabelle 1 angegebenen Verfahrwege gilt jeweils eine Toleranz bzw. Genauigkeit von +/- 1 mm. Durch Abgleichen der Norm kann der Benutzer überprüfen, ob er die normgemäße Lochplatte und den richtigen Kolben ausgewählt hat. Falls der Benutzer die falsche Lochplatte oder den falschen Kolben ausgewählt hat, kann eine Warnung auf einer Anzeige erscheinen oder ein akustisches Signal kann ertönen. Gegebenenfalls kann der Benutzer aufgefordert werden, die Lochplatte bzw. den Kolben zu tauschen oder es wird unterbunden, eine Destillationsmessung zu starten, falls nicht die richtigen Komponenten eingesetzt wurden.

## Patentansprüche

1. Vorrichtung (100) zur Vorbereitung einer Destillationsmessung einer Flüssigkeit, aufweisend:
eine Lochplatte (103,203a);
einen Behälter (105) mit einer Öffnung;
eine Heizung (101), auf die die Lochplatte (103,203a) aufsetzbar ist und die zum Heizen des die Flüssigkeit (107) enthaltenen, auf die Lochplatte (103) aufgesetzten Behälters (105) zum Durchführen eines standardisierten Tests zur Bestimmung von Verdampfungseigenschaften der Flüssigkeit ausgebildet ist;
ein, insbesondere elektrisches, Verfahrsystem (110), das ausgebildet ist, die Heizung (101) zu verfahren und ein weiteres Verfahren der Heizung (101) zu unterbrechen, falls eine Andruckkraft (F) der auf die Heizung (101) aufgesetzten Lochplatte (103) gegen den Behälter (105) einen Schwellenwert erreicht,
wobei das Verfahrsystem (110) ein verfahrbares Trägersystem (133), von dem die Heizung (101) gehaltert ist, umfasst, wobei die Vorrichtung ausgebildet ist, eine für eine Länge und/oder Position (z) entlang eines Verfahrwegs des Trägersystems (133) indikative Größe, insbesondere Anzahl der Schritte eines Schrittmotors (151), zu überwachen und/oder zu bestimmen.

2. Vorrichtung gemäß dem vorangehenden Anspruch, wobei die Vorrichtung ausgebildet ist, das Trägersystem (133) ausgehend von einer Ausgangsposition (za), insbesondere einer vorbestimmten Anfangsposition, bis zu einer Endposition (ze) des Trägersystems zu verfahren, bei der die Andruckkraft (F) den Schwellenwert erreicht,
wobei die der Ausgangsposition (za) zugeordnete für die Position entlang des Verfahrwegs indikative Größe einen ersten Wert (w1) hat und
wobei die der Endposition (ze) zugeordnete für die Position entlang des Verfahrwegs indikative Größe einen zweiten Wert (w2) hat,
wobei die Vorrichtung ausgebildet ist, die Differenz des ersten Wertes und des zweiten Wertes als für die dabei zurückgelegte Verfahrweglänge indikativen Differenzwert zu berechnen.

3. Vorrichtung gemäß dem vorangehenden Anspruch, wobei die Vorrichtung ferner ausgebildet ist:
basierend auf dem Differenzwert (Δz), insbesondere ferner basierend auf einem Typ und/oder einer Größe und/oder einem Identifikator des Behälters (105), auf einen Typ und/oder Größe und/oder einen Identifikator der Lochplatte (103) zurückzuschließen und/oder über ein akustisches und/oder optisches Anzeigesystem anzuzeigen; und/oder
basierend auf dem Differenzwert (Δz) auf einen Typ und/oder Größe und/oder einen Identifikator der Lochplatte (103) zurückzuschließen und/oder über ein akustisches und/oder optisches Anzeigesystem anzuzeigen und/oder auf einen Typ und/oder eine Größe und/oder einen Identifikator des Behälters (105) zurückzuschließen und/oder über ein akustisches und/oder optisches Anzeigesystem anzuzeigen.

4. Vorrichtung gemäß einem der vorangehenden Ansprüche, wobei das Verfahrsystem aufweist:
einen elektrischen Schrittmotor (151);
eine, insbesondere entlang einer Schiene (143) angeordnete, Spindel (153), die vom Schrittmotor angetrieben ist.

5. Vorrichtung gemäß dem vorangehenden Anspruch, wobei das Trägersystem (133) aufweist:
ein Tragelement (139), von dem die Heizung (101) getragen ist;
ein Verfahrelement (141), das zum Antrieb in Eingriff mit der Spindel (153) steht und insbesondere von der Schiene (143) geführt ist;
eine Kraftmesseinrichtung (145), über die das Tragelement (139) mit dem Verfahrelement (141) gekoppelt ist.

6. Vorrichtung gemäß dem vorangehenden Anspruch, wobei die Kraftmesseinrichtung aufweist:
eine Feder (147), deren eines Ende an dem Verfahrelement (141) und deren anderes Ende an dem Tragelement (139) angebracht ist;
eine Lichtschranke (149), gekoppelt mit dem Schrittmotor (151), wobei die Feder (147) bei dem Schwellenwert der Kraft um eine definierte Strecke gestaucht wird, wodurch die Lichtschranke (149) auslöst, um das Verfahrsystem (110) zum Anhalten zu bringen.

7. Flüssigkeitsanalysesystem (150, 250), insbesondere Automatische Destillations-Einheit, zum Bestimmen von Verdampfungseigenschaften der Flüssigkeit gemäß zumindest einem standardisierten Test, aufweisend:
eine Vorrichtung (100, 200) zur Vorbereitung einer Destillationsmessung einer Flüssigkeit gemäß einem der vorangehenden Ansprüche, wobei der Behälter (105, 205) mit einer Öffnung ausgestattet ist, insbesondere mit einem zu einem Kondensator (269) führenden Zweig; und
eine Vorrichtung (120, 220) zum Verschließen des Behälters mit:
zumindest einem Temperaturmesssystem, insbesondere zum Messen einer Dampftemperatur der Flüssigkeit innerhalb des Behälters, mit einem Stab (123, 223) und einem Temperaturmessfühler (121, 221);
einem Verschlussteil (125) zum Verschließen des Behälters (105) mit einer Durchgangsöffnung, durch die ein Teil des Stabes derart geführt ist, dass der Temperaturmessfühler innerhalb des Behälters (105) angeordnet ist;
optional einem oberhalb des Verschlussteils quer zur Längsrichtung des Stabes über den Verschlussteil hervorragender Stützteil (129, 229), der mit einem Gegenstück (131, 231) einer Hilfsvorrichtung ineinanderschiebar ist;
und insbesondere
mehrere standardisierte Lochplatten (203a,b,c,d), die auf die Heizung (101, 201) aufsetzbar sind.

8. Verfahren zur Vorbereitung einer Destillationsmessung einer Flüssigkeit, aufweisend:
Auswählen einer Lochplatte (203a) aus einer Gruppe von Lochplatten (203a,b,c,d);
Aufsetzen der Lochplatte (203a) auf eine Heizung (201), die zum Heizen eines die Flüssigkeit (207) enthaltenen, auf die Lochplatte (203a) aufgesetzten Behälters (205) zum Durchführen eines standardisierten Tests zur Bestimmung von Verdampfungseigenschaften der Flüssigkeit ausgebildet ist, wobei der Behälter (205) mit einer Öffnung ausgestattet ist;
Verfahren der Heizung (201) zum Behälter (205) hin;
Unterbrechen des Verfahrens, falls eine Andruckkraft (F) der auf die Heizung (201) aufgesetzten Lochplatte (203a) gegen den Behälter (205) einen Schwellenwert erreicht,
wobei das Verfahrsystem (110) ein verfahrbares Trägersystem (133), von dem die Heizung (101) gehaltert ist, umfasst,
wobei das Verfahren ferner umfasst:
Überwachen und/oder Bestimmen einer für eine Länge und/oder Position (z) entlang eines Verfahrwegs des Trägersystems (133) indikativen Größe, insbesondere Anzahl der Schritte eines Schrittmotors (151).

## Claims

1. Device (100) for preparing a distillation measurement of a liquid, comprising:
a hole plate (103, 203a);
a container (105) with an opening;
a heating unit (101) which is placeable on the hole plate (103, 203a) and which is configured for heating the container (105) which contains the liquid (107) which is placed on the hole plate (103) for performing a standardized test for a determination of evaporation properties of the liquid;
a, in particular electric, displacing system (110) which is configured to displace the heating unit (101) and to interrupt a further displacement of the heating unit (101), if a pressing force (F) of the hole plate (103) which is placed on the heating unit (101) against the container (105) reaches a threshold value,
wherein the displacing system (110) encompasses a displaceable carrier system (133) by which the heating unit (101) is supported, wherein the device is configured to monitor and/or to determine a quantity which is indicative for a length and/or a position (z) along a displacing path of the carrier system (133), in particular a number of steps of a stepping motor (151).

2. Device according to the preceding claim, wherein the device is configured to displace the carrier system (133) starting from an initial position (za), in particular a predetermined starting position, up to an end position (ze) of the carrier system, where the pressing force (F) reaches the threshold value,
wherein the quantity which is assigned to the initial position (za), which is indicative for the position along the displacing path, has a first value (w1) and wherein the quantity which is assigned to the end position (ze), which is indicative for the position along the displacing path, has a second value (w2),
wherein the device is configured to calculate the difference of the first value and the second value as a difference value which is indicative for the covered displacing path length.

3. Device according to the preceding claim, wherein the device is further configured:
to conclude to and/or to indicate via an acoustic and/or optical display system a type and/or a size and/or an identifier of the hole plate (103), based on the difference value (Δz), in particular further based on a type and/or a size and/or an identifier of the container (105); and/or
to conclude to and/or to indicate via an acoustic and/or optical display system a type and/or a size and/or an identifier of the hole plate (103), based on the difference value (Δz), and/or
to conclude to and/or to indicate via an acoustic and/or optical display system a type and/or a size and/or an identifier of the container (105).

4. Device according to one of the preceding claims, wherein the displacing system comprises:
an electric stepping motor (151);
a spindle (153) which is driven by the stepping motor, in particular which is arranged along a rail (143).

5. Device according to the preceding claim, wherein the carrier system (133) comprises:
a supporting element (139) by which the heating unit (101) is supported;
a displacing element (141) which is engaged with the spindle (153) for driving and which is in particular guided by the rail (143);
a force measuring unit (145) by which the supporting element (139) is coupled with the displacing element (141).

6. Device according to the preceding claim, wherein the force measuring unit comprises:
a spring (147) whose one end is attached to the displacing element (141) and whose other end is attached to the supporting element (139);
a light barrier (149) coupled with the stepping motor (151), wherein the spring (147), at the threshold value of the force, is compressed by a defined length, whereby the light barrier (149) triggers to cause the displacing system (110) to stop.

7. Liquid analysis system (150, 250), in particular automatic distilling unit, for determining evaporation properties of the liquid according to at least one standardized test, comprising:
a device (100, 200) for preparing a distillation measurement of a liquid according to one of the preceding claims, wherein the container (105, 205) is equipped with an opening, in particular with a branch which is leading to a condenser (269); and
a device (120, 220) for closing the container with:
at least one temperature measuring system, in particular for measuring a vapor temperature of the liquid within the container, with a bar (123, 223) and a temperature sensor (121, 221);
a closing member (125) for closing the container (105) with a through opening through which a part of the bar is guided, such that the temperature sensor is arranged within the container (105);
optionally a supporting member (129, 229) which is protruding beyond the closing member above the closing member transverse to the longitudinal direction of the bar, which is telescopable with a counterpiece (131, 231) of an auxiliary device;
and in particular
multiple standardized hole plates (203a,b,c,d) which are placeable upon the heating unit (101, 201).

8. Method for preparing a distillation measurement of a liquid, comprising:
selecting a hole plate (203a) from a group of hole plates (203a,b,c,d);
placing the hole plate (203a) on a heating unit (201) which is configured for heating a container (205) which contains the liquid (207) which is placed on the hole plate (203a), for performing a standardized test for determining evaporation properties of the liquid,
wherein the container (205) is equipped with an opening;
displacing the heating unit (201) to the container (205);
interrupting the method, if a pressing force (F) of the hole plate (203a) which is placed on the heating unit (201) against the container (205) reaches a threshold value,
wherein the displacing system (110) encompasses a displaceable carrier system (133) by which the heating unit (101) is supported,
wherein the method further encompasses:
monitoring and/or determining a quantity which is indicative for a length and/or a position (z) along a displacing path of the carrier system (133), in particular a number of steps of a stepping motor (151).

## Revendications

1. Dispositif (100) pour préparer une mesure de distillation d'un liquide, présentant :
une plaque perforée (103, 203a) ;
un récipient (105) avec une ouverture ;
un chauffage (101), sur lequel la plaque perforée (103, 203a) peut être placée et qui est réalisé pour chauffer le récipient (105) contenant le liquide (107), placé sur la plaque perforée (103), pour mettre en œuvre un test standardisé pour définir des propriétés d'évaporation du liquide ;
un système de déplacement (110), en particulier électrique, qui est réalisé pour déplacer le chauffage (101) et pour interrompre un autre déplacement du chauffage (101) si une force de compression (F) de la plaque perforée (103) placée sur le chauffage (101) contre le récipient (105) atteint une valeur de seuil,
**caractérisé en ce que** le système de déplacement (110) comprend un système porteur (133) pouvant être déplacé, par lequel le chauffage (101) est maintenu, dans lequel le dispositif est réalisé pour surveiller et/ou définir une grandeur indicative d'une longueur et/ou position (z) le long d'un chemin de déplacement du système porteur (133), en particulier un nombre des étapes d'un moteur pas à pas (151) .

2. Dispositif selon la revendication précédente, **caractérisé en ce que** le dispositif est réalisé pour déplacer le système porteur (133) en partant d'une position de départ (za), en particulier d'une position de départ prédéfinie, jusqu'à une position finale (ze) du système porteur, dans laquelle la force de compression (F) atteint la valeur de seuil,
dans lequel la grandeur associée à la position de départ (za) indicative de la position le long du chemin de déplacement a une première valeur (w1), et
dans lequel la grandeur associée à la position finale (ze) indicative de la position le long du chemin de déplacement a une deuxième valeur (w2),
dans lequel le dispositif est réalisé pour calculer la différence de la première valeur et de la deuxième valeur en tant que valeur différentielle indicative de la longueur de chemin de déplacement parcourue ce faisant.

3. Dispositif selon la revendication précédente, **caractérisé en ce que** le dispositif est réalisé en outre :
pour déduire, sur la base de la valeur différentielle (Δz), en particulier en outre sur la base d'un type et/ou d'une grandeur et/ou d'un identifiant du récipient (105), un type et/ou une grandeur et/ou un identifiant de la plaque perforée (103) et/ou pour les afficher sur un système d'affichage acoustique et/ou optique ; et/ou
pour déduire, sur la base de la valeur différentielle (Δz), un type et/ou une grandeur et/ou un identifiant de la plaque perforée (103) et/ou pour les afficher sur un système d'affichage acoustique et/ou optique et/ou pour déduire un type et/ou une grandeur et/ou un identifiant du récipient (105) et/ou pour les afficher sur un système d'affichage acoustique et/ou optique.

4. Dispositif selon l'une quelconque des revendications précédentes, **caractérisé en ce que** le système de déplacement présente :
un moteur pas à pas électrique (151) ;
une broche (153), disposée en particulier le long d'un rail (143), qui est entraînée par le moteur pas à pas.

5. Dispositif selon la revendication précédente, **caractérisé en ce que** le système porteur (133) présente :
un élément de support (139), par lequel le chauffage (101) est porté ;
un élément de déplacement (141), qui est en prise avec la broche (153) pour l'entraînement et en particulier est guidé par le rail (143) ;
un système de mesure de force (145), par l'intermédiaire duquel l'élément porteur (139) est couplé à l'élément de déplacement (141).

6. Dispositif selon la revendication précédente, **caractérisé en ce que** le système de mesure de force présente :
un ressort (147), dont une extrémité est installée sur l'élément de déplacement (141) et dont l'autre extrémité est installée sur l'élément porteur (139) ;
une barrière photoélectrique (149) couplée au moteur pas à pas (151),
dans lequel le ressort (147) est tassé sur une distance définie lorsque la force présente la valeur de seuil, ce qui permet de déclencher la barrière photoélectrique (149) pour amener le système de déplacement (110) à s'arrêter.

7. Système d'analyse de liquide (150, 250), en particulier unité de distillation automatique, pour définir des propriétés d'évaporation du liquide selon au moins un test standardisé, présentant :
un dispositif (100, 200) pour préparer une mesure de distillation d'un liquide selon l'une quelconque des revendications précédentes, **caractérisé en ce que** le récipient (105, 205) est équipé d'une ouverture, en particulier d'un embranchement menant à un condensateur (269) ; et
un dispositif (120, 220) pour fermer le récipient avec :
au moins un système de mesure de température, en particulier pour mesurer une température de vapeur du liquide à l'intérieur du récipient, avec une tige (123, 223) et une sonde de mesure de température (121, 221) ;
une partie de fermeture (125) pour fermer le récipient (105) avec une ouverture de passage, par laquelle une partie de la tige est guidée de telle manière que la sonde de mesure de température est disposée à l'intérieur du récipient (105) ;
en option une partie d'appui (129, 229) dépassant de la partie de fermeture au-dessus de la partie de fermeture de manière transversale par rapport au sens longitudinal de la tige qui peut être enfilée avec une contre-pièce (131, 231) d'un dispositif d'aide ;
et en particulier
plusieurs plaques perforées (203a, b, c, d) standardisées qui peuvent être placées sur le chauffage (101, 201).

8. Procédé pour préparer une mesure de distillation d'un liquide, présentant :
la sélection d'une plaque perforée (203a) parmi un groupe de plaques perforées (203a, b, c, d) ;
le placement de la plaque perforée (203a) sur un chauffage (201), qui est réalisé pour chauffer un récipient (205) contenant le liquide (207), placé sur la plaque perforée (203a) pour mettre en œuvre un test standardisé pour définir des propriétés d'évaporation du liquide,
**caractérisé en ce que** le récipient (205) est équipé d'une ouverture ;
le déplacement du chauffage (201) en direction du récipient (205) ;
l'interruption du déplacement, si une force de compression (F) de la plaque perforée (203a) placée sur le chauffage (201) contre le récipient (205) atteint une valeur de seuil,
dans lequel le système de déplacement (110) comprend un système porteur (133) pouvant être déplacé, par lequel le chauffage (101) est maintenu,
dans lequel le procédé comprend en outre :
la surveillance et/ou la définition d'une grandeur indicative d'une longueur et/ou position (z) le long d'un chemin de déplacement du système porteur (133), en particulier le nombre des étapes d'un moteur pas à pas (151) .
